Europäisches Patentamt

European Patent Office

Office européen des brevets

(19)

(11) Publication number: 0 425 462 A2

# EUROPEAN PATENT APPLICATION

(12)

(21) Application number: 90850345.1

(22) Date of filing: 22.10.90

(51) Int. Cl.⁵: B60D 1/62

(30) Priority: 25.10.89 SE 8903545

(43) Date of publication of application:
02.05.91 Bulletin 91/18

(84) Designated Contracting States:
BE DE FR GB NL SE

(71) Applicant: VBG Produkter AB
Box 1216
S-462 01 Vänersborg(SE)

(72) Inventor: Nordin, Bengt

S-830 80 Hoting(SE)

(74) Representative: Delhage, Einar et al
Bergenstrahle & Lindvall AB Sankt
Paulsgatan 1
S-116 47 Stockholm(SE)

(54) Trailer coupling.

(57) In a trailer coupling for coupling together a towing vehicle and a trailer, a coupling portion (2) mounted at the rear of the trailer is arranged to receive, via a coupling mouth (6), a coupling end portion (8) of a drawbar attached to the trailer. The coupling end portion (8) is connected with the drawbar via a pivot (10). The towing vehicle coupling portion (2) and the trailer coupling end portion (8) include means (74,76) for mutual coupling together of said portions (2,8), as well as means (94,96) for providing, in association with said coupling together, an automatic interconnection of fluid and current conductors of the towing vehicle and trailer, respectively. Said coupling portion (2) and said coupling end portion (8), as well as said means (74,76) for mutual coupling together are mutually so shaped and arranged that said portions (2,8) are rigidly and unmovably connected to each other in the coupled together state.

The means (94,96) for automatic interconnection of fluid and current conductors include an exterior coupling panel (94,96) on each of said coupling portion (2) and coupling end portion (8), said coupling panels (94,96) being arranged to be mutually rigidly coupled together at said coupling together and thereby to establish the interconnection between the fluid and current conductors of the respective vehicles.

Fig 2

EP 0 425 462 A2

## TRAILER COUPLING.

The present invention relates to a trailer coupling for coupling together a towing vehicle and a trailer, a coupling portion mounted at the rear of the trailer being arranged to receive, via a coupling mouth, a coupling end portion of a drawbar attached to the trailer, said coupling end portion being connected with the drawbar via a pivot, the towing vehicle coupling portion and the trailer coupling end portion including means for mutual coupling together of said portions, as well as means for providing, in association with said coupling together, an automatic interconnection of fluid and current conductors of the towing vehicle and trailer, respectively, and wherein said coupling portion and said coupling end portion, as well as said means for mutual coupling together are mutually so shaped and arranged that said portions are rigidly and unmovably connected to each other in the coupled together state.

Through the German patent specification 849658 a trailer coupling of this kind is known, in which the means for automatic interconnection of fluid and current conductors are integrated into the coupling portion of the towing vehicle and the coupling end portion of the drawbar. Hereby said portions are complicated and expensive to manufacture and the means for automatic interconnection of fluid and current conductors not easily accessible for supervision, service and repair. Furthermore different combinations of fluid and current conductors for different combinations of towing vehicle and trailer may require different shaping of the coupling portions, in which the means for automatic interconnection are integrated. This in turn thus implies that several different sets of coupling portions adapted to each other may be required.

The object of the invention is to provide a trailer coupling of the kind indicated above, wherein the means for automatic interconnection of fluid and current conductors are easily accessible for supervision, service and repair, and where only one design of the coupling portions is required to take care of all possible combinations of fluid and current conductors.

According to the invention this object has been attained in that the means for automatic interconnection of fluid and current conductors include an exterior coupling panel on each of said coupling portion and coupling end portion, said coupling panels being arranged to be mutually rigidly coupled together at said coupling together and thereby to establish the interconnection between the fluid and current conductors of the respective vehicles.

Advantageous embodiments of the invention have obtained the features stated in the respective subclaims.

The invention will now be described more closely below with reference to the attached drawings, on which

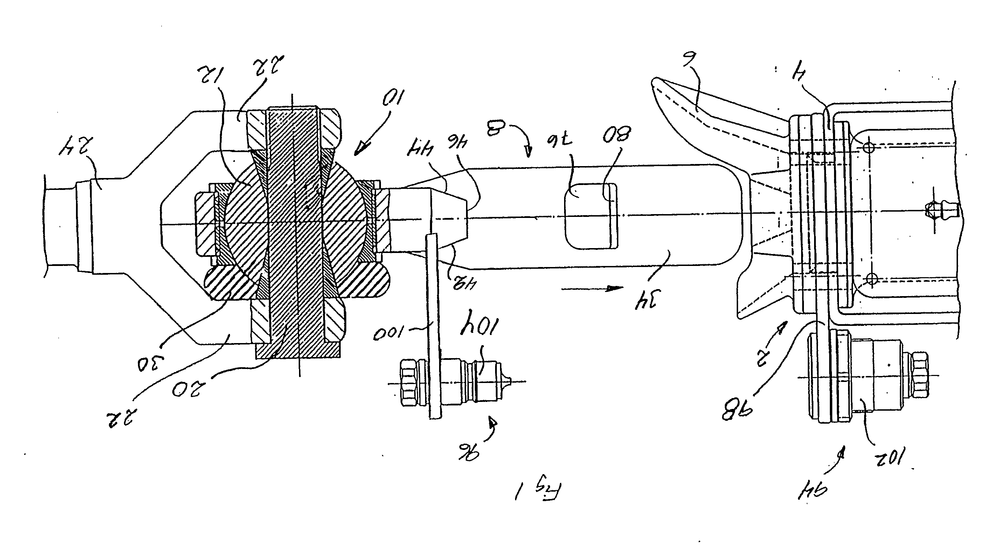

Figure 1 in a side view, partly in section, shows the essential portions of one embodiment of a trailer coupling according to the invention, said portions being disconnected from each other,

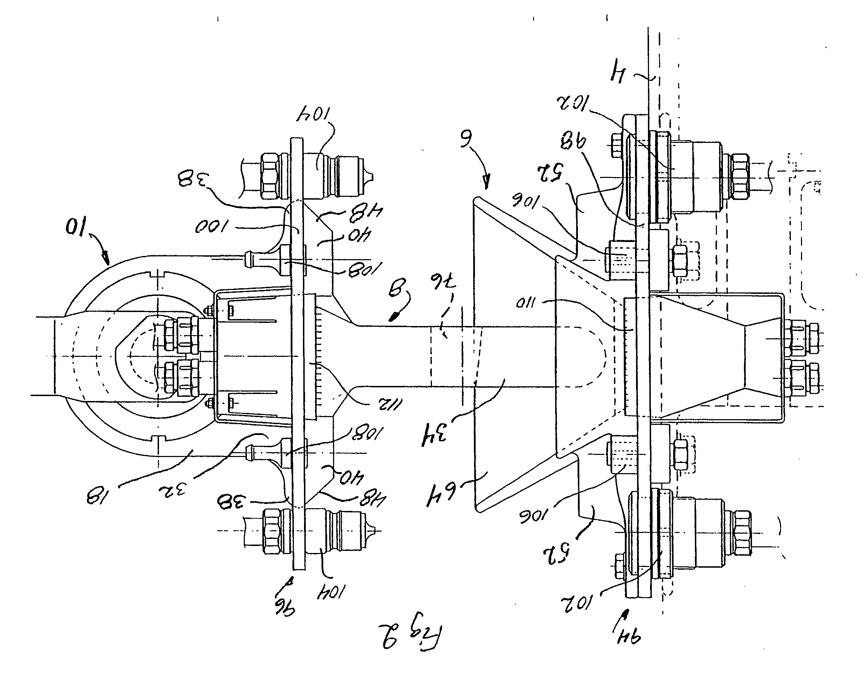

Figure 2 shows the same portions as in Figure 1 in a view from above,

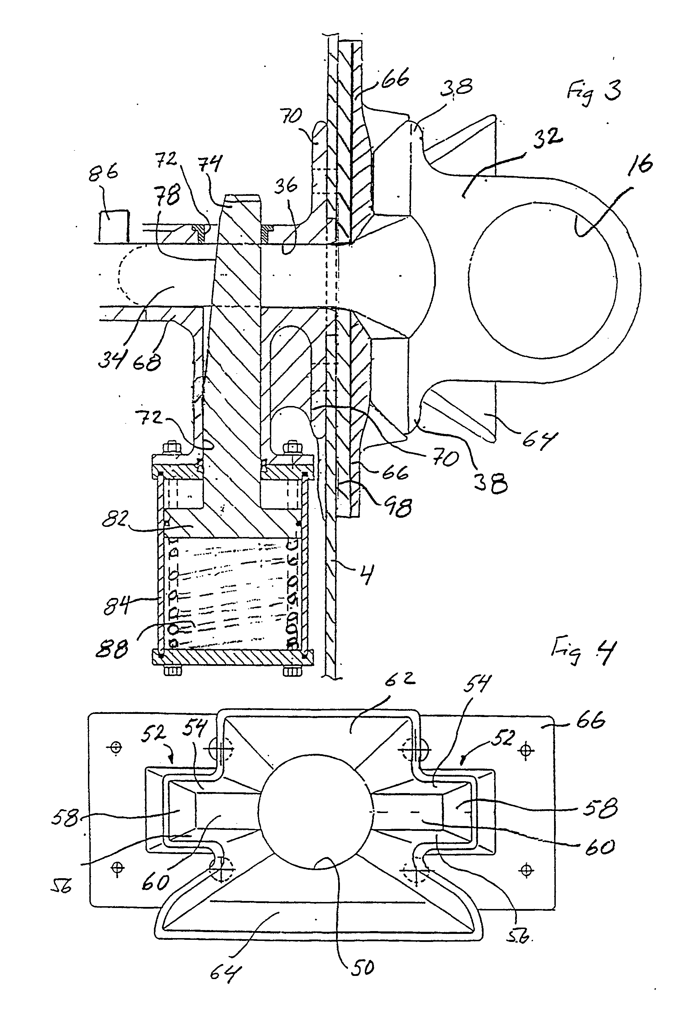

Figure 3 in an axial section perpendicularly to the drawing plane in Figure 1 shows two coupling portions of the coupling according to Figure 1 in engagement with each other,

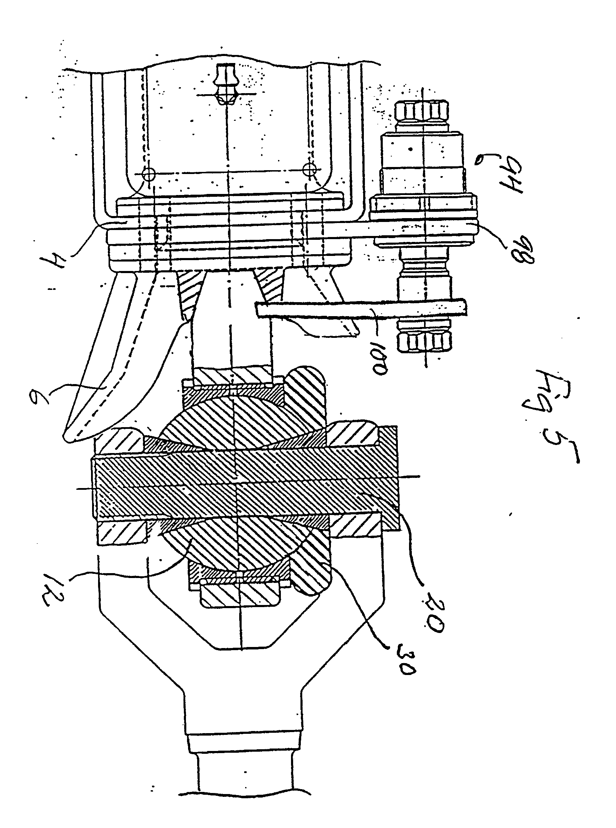

Figure 4 shows an end view towards the opening of a coupling mouth included in the trailer coupling according to the invention,

Figure 5 in a similar view as in Figure 1 shows the portions coupled together.

The trailer coupling shown on the drawings is intended for coupling together of a towing vehicle and a trailer. It includes a coupling portion, generally designated 2, intended to be bolted on a rearwardly facing outside of a wall 4 of a rear drawbeam of the towing car which is not shown in more detail. The coupling portion 2 includes a coupling mouth 6 to be described more closely below and intended to receive a coupling end portion 8 at the end of a drawbar, not shown, of the trailer.

The coupling end portion 8 is connected with the drawbar via a ball pivot generally indicated 10. The ball 12 of the ball pivot 10 is journalled in an opening 6 in a flat shaped end portion 18 of the coupling end portion 8. A pivot bolt 20 extends between two fork arms 22 at the end of a connection bolt 24 intended to be connected to the drawbar, and through the ball 12. The ball pivot proper can be of a design known per se and the details thereof need therefore not be described here. However, the pivot also comprises a device aiming at preventing the coupling end portion 8, when it is disengaged from the coupling portion 2, from falling down due to its own weight by pivoting movement of the ball 12. This device comprises a portion of an elastic support ring 30, which is clamped between the inner portion of the upper fork arm 22, on one hand, and the upper side facing thereagainst, of the journal for the ball 12 and the portion of the ball connecting thereto, on the other hand. However, the ring 30 has enough elasticity for allowing, in the coupled together state of the coupling, a corresponding pivot movement when the vehicle train is in service. The support ring 30 can, of course, be replaced by spring dishes or similar, having the same function.

At its end facing away from the fork arm 22 the connection bolt 24 is shaped for connection to the drawbar in a conventional way. The coupling end portion 8 has a midportion 32, which is shaped to cooperate with the coupling mouth 6 and passes over into a coupling pin 34 having an oval section intended to be introduced, via the coupling mouth 6, into a correspondingly shaped receiving channel 36 in the coupling portion 2.

The midportion 32 forms a sidewardly extending widening to both sides of the flat shaped end portion 18 so as to obtain two side extensions 38. The side extensions 38 are each shaped with its fore edge portion 40 which is wedgelike shaped in the direction of the coupling pin 34 and has upper and lower wedge surfaces 42 and 44, respectively, united by means of a fore edge surface 46. Furthermore the side extensions 38 each has its end surface 48 which is beveled in the direction of the coupling pin.

The coupling mouth 6 on each side of a central opening 50 has a wedge shaped receiving space 52 shaped for receiving the respektive side extensions 38. Thus, each space 52 has two inner walls 54 and 56, respectively, facing each other, the slope and mutual distance of which correspond to the slope and mutual distance of the wedge surfaces 42 and 44, respectively, and an inner end wall 58 with a slope corresponding to that of the end surface 48. The walls 54, 56 and 58 are, however, higher than the surface 42, 44, and 48, respectively, so that the side extensions 38, at the introduction thereof, can be wedged up rigidly in the spaces 52 without being prevented by the bottom designated 60 of the latter.

The coupling mouth 6 also has guiding surfaces 62 and 64 of essentially conventional shape for guiding the coupling pin 34 into the channel 36, and is carried by a mounting plate 66 for mounting of the coupling mouth on the drawbeam 4 by means of bolt joints.

On the inner side of the drawbeam wall 4 a housing 68 for the receiving channel 36 for the coupling pin 34 is bolted by means of a mounting flange 70. Besides the channel 36, the housing 68 includes a further channel 72 crossing the channel 36 perpendicularly thereto. The channel 72 serves as a guide for a piston 74 intended for locking the coupling pin 34 in the channel 36. More particularly the coupling pin 34 has a through hole 76 in such a position along its length that it extends in line with the channel 72 in the locked position of the coupling pin 34. The piston 74 and the hole 76 have a complementary wedge shape with a wedge surface 78 and 80, respectively. The wedge surface 80 is located on such a distance from the extensions 38 of the coupling end portion 8 that wedge action between the piston 74 and the hole 76 draws the extensions 38 to a wedge like rigid engagement into the coupling mouth spaces 52 as has been described above.

The piston 74 has a piston head 82 which is guided in a pneumatic cylinder 84 having pressurized air input lines and being attached to the housing, and by means of which the piston 74 is moved. The pressurized air supply is controlled by a signal from a sensor, indicated at 86, for remote sensing of the position of the end of the coupling pin 34. More particularly this can be carried through in such a way that when the whole 76 is in a position for allowing introduction therein of the piston 74, the coupling movement of the latter is started by pressurizing the portion of the cylinder 84 which is located on the side of the piston head 82 facing away from the piston 74.

A pressure spring 88 acts between the piston 82 and the wall of the cylinder 84 facing away from the piston 74 and thereby serves to keep the piston in coupling position at unintentional drop out of the pressure in the cylinder 84. As a further safety measure the wedge angle of the piston 74 and the wedge surfaces 78 and 80, respectively, of the hole 76 are preferably chosen so that a pulling force outwardly on the coupling pin 34 at unintentional drop out of the coupling force exerted on the piston 74 does not obtain a component in the drawing out direction of the piston 74.

On the coupling portion 2 and the coupling end portion 8 coupling panels, generally designated 94 and 96, respectively, are arranged for automatic interconnection of the hydraulic fluid and/or pressurized air lines and current conductors of the towing car and the trailer, respectively, at coupling together of the coupling portions 2 and 8. More particularly, the coupling panel 94 is rigidly connected to the coupling portion 2 by means of a mounting flange 98 bolted between the mounting flange 66 of the coupling mouth and the beam wall 4. The coupling panel 96 is likewise rigidly mounted on the midportion 32 of the coupling end portion by means of a mounting flange 100.

The coupling panels 94 and 96, respectively, include each a pair of outer hydraulic interconnecting means 102 and 104, respectively, and, behind these, a pair of pneumatic interconnecting means 106 and 108, respectively, and a centrally arranged electric interconnection panel 110 and 112, respectively. Said respective interconnection means of the coupling panels 94 and 96 are adapted to each other for interconnecting the hydraulic lines, pneumatic lines and current conductors of the towing vehicle and trailer, respectively.

It should be realized that by means of the above described rigid coupling together of the coupling portion 2 and the coupling end portion 8 a likewise rigid coupling together of the coupling panels 94 and 96 and their respective interconnecting means is obtained, which excludes destroying force action on the interconnecting means and their connected lines. This state is illustrated in Figure 5.

## Claims

1. A trailer coupling for coupling together a towing vehicle and a trailer, a coupling portion (2) mounted at the rear of the trailer being arranged to receive, via a coupling mouth (6), a coupling end portion (8) of a drawbar attached to the trailer, said coupling end portion (8) being connected with the drawbar via a pivot (10), the towing vehicle coupling portion (2) and the trailer coupling end portion (8) including means (74,76) for mutual coupling together of said portions (2,8), as well as means (94,96) for providing, in association with said coupling together, an automatic interconnection of fluid and current conductors of the towing vehicle and trailer, respectively, and wherein said coupling portion (2) and said coupling end portion (8), as well as said means (74,76) for mutual coupling together are mutually so shaped and arranged that said portions (2,8) are rigidly and unmovably connected to each other in the coupled together state, characterized in that the means (94,96) for automatic interconnection of fluid and current conductors include an exterior coupling panel (94,96) on each of said coupling portion (2) and coupling end portion (8), said coupling panels (94,96) being arranged to be mutually rigidly coupled together at said coupling together and thereby to establish the interconnection between the fluid and current conductors of the respective vehicles.

2. Trailer coupling according to claim 1, characterized in that the coupling portion (2) of the towing vehicle is designed with a wedge shaped recess (52) on each side of the coupling mouth (6), and the coupling end portion (8) of the drawbar is provided with correspondingly designed and located wedge shaped extensions (38), which are in wedgelike rigid engagement with the wedge shaped recessed (52) in a coupled together state of said portions (2,8).

3. A trailer coupling according to claim 1 or 2, characterized in that the means (74,76) for mutual coupling together of said portions are arranged to draw the portions (2,8) towards each other during the coupling together step.

4. A trailer coupling according to any of the preceding claims, characterized in that the coupling portion (2) of the towing vehicle includes a receiving channel (36), connecting to the coupling mouth (6), for a rod shaped end portion (34) of the coupling end portion (8) of the drawbar with a section adapted to the section of the receiving channel.

5. A trailer coupling according to claim 4, characterized in that the coupling portion of the towing vehicle includes a piston (74), which during the coupling together is movable into engagement in a transverse hole (76) in the rod shaped end portion (34).

6. A trailer coupling according to claim 5, characterized in that the piston (74) and the transverse hole (76) are mutually wedgelike shaped in such a way that through the engagement between the piston and the transverse hole the coupling portion (2) of the towing vehicle and the coupling end portion (8) of the drawbar are drawn towards each other during the coupling together step.

7. A trailer coupling according to claim 4, 5 or 6, characterized in that the coupling movement of the piston (74) is controlled by a sensor (86), sensing the position of the rod shaped end portion (34) in the receiving channel (36).

8. A trailer coupling according to any of the preceding claims, characterized in that the pivot is a ball pivot (10) of the universal type.

Fig 1

Fig 2

Fig 3

Fig 4

Fig. 5